# EUROPEAN PATENT APPLICATION

(11) **EP 4 793 013 A1**
(43) Date of publication of application: **19.08.2026**
(21) Application number: 24877195.8
(22) Date of filing: 09.10.2024
(51) Int. Cl.: B29B 9/02, B29B 17/00, B29B 17/04, C08G 63/00, D01F 6/84

(54) **LIQUID CRYSTAL POLYESTER CHIP-SHAPED ARTICLE, RECYCLED LIQUID CRYSTAL POLYESTER MOLDED BODY, AND METHOD FOR PRODUCING SAME**

(30) Priority: 12.10.2023 JP 2023177123
(71) Applicant: Kuraray Co., Ltd., Kurashiki-shi, Okayama 710-0801 (JP)
(72) Inventor: NAKAYAMA, Kazuhisa, Saijo-shi, Ehime 793-8585 (JP); TSUJIMOTO, Takuya, Kurashiki-shi, Okayama 713-8550 (JP); KATAYAMA, Takashi, Kurashiki-shi, Okayama 713-8550 (JP)
(74) Representative: Müller-Boré & Partner Patentanwälte PartG mbB
(86) International application number: PCT/JP2024/036077
(87) International publication number: WO 2025/079600

(57) **Abstract**

Provided is a liquid crystal polyester chip-shaped article including a recovered liquid crystal polyester formed body as at least a part of a raw material. The liquid crystal polyester chip-shaped article includes a recovered liquid crystal polyester formed body as a raw material, and has a bulk density of 0.15 to 1.20 g/mL and has an average maximum length of 3 to 30 mm.

## Description

### CROSS REFERENCE TO THE RELATED APPLICATION

This application is based on and claims Convention priority to Japanese patent application No. 2023-177123, filed October 12, 2023, the entire disclosure of which is herein incorporated by reference as a part of this application.

### FIELD OF THE INVENTION

The present invention relates to a liquid crystal polyester chip-shaped article formed using a recovered (collected) liquid crystal polyester formed body as at least a part of a raw material, and a method for producing the same. The present invention also relates to a recycled liquid crystal polyester formed body formed from the liquid crystal polyester chip-shaped article, and a method for producing the same.

### BACKGROUND OF THE INVENTION

In recent years, there has been a societal demand for the development of products and methods for producing the same with low environmental impact. For example, in the textile industry, it is recommended to collect and recycle commercially available fiber products for clothing such as polyester and nylon. On the other hand, high-functional fibers having high strength, high heat resistance, and high chemical resistance are difficult to be recycled even when collected, and there is no substantial progress in recycling their fibers at present.

As a technique related to recycling high-functional fibers, for example, Patent Document 1 (JP Laid-open Patent Publication No. 2004-100066) discloses a method for reusing a used heat-resistant and high-functional yarn product, the method including: cleaning and crushing the used heat-resistant and high-functional yarn product; and forming a nonwoven fabric from the obtained cottonlike material.

Patent Document 2 (JP Laid-open Patent Publication No. 2005-105491) discloses a recycled spun yarn obtained by using staple fibers in a proportion of 5 to 95 mass%, the staple fibers obtained by recycling a used high-functional fiber product.

### CONVENTIONAL ART DOCUMENT

### PATENT DOCUMENT

[Patent Document 1] JP Laid-open Patent Publication No. 2004-100066
[Patent Document 2] JP Laid-open Patent Publication No. 2005-105491

### SUMMARY OF THE INVENTION

### PROBLEMS TO BE SOLVED BY THE INVENTION

However, in Patent Documents 1 and 2, the fiber shape derived from the used fiber is utilized as it is, and there is no technical idea that the fiber is formed and processed again, and there is not much flexibility in recycling the fiber.

Accordingly, an object of the present invention is to provide a liquid crystal polyester chip-shaped article formed by using a recovered liquid crystal polyester formed body as a raw material; and a method for producing the same.

Another object of the present invention is to provide a recycled liquid crystal polyester formed body formed from the liquid crystal polyester chip-shaped article; and a method for producing the same.

### MEANS FOR SOLVING THE PROBLEMS

The inventors of the present invention have conducted extensive studies in order to solve the above-described problems of the conventional technology, and found a new problem that when a recovered liquid crystal polyester formed body is melt-molded using an extruder for recycle as a raw material, the shape thereof may affect the feedability during feeding into the extruder, the biting property into the screw of the extruder, the melt- kneadability in the extruder, and the like, and therefore, the recycling thereof may be difficult when the recovered liquid crystal polyester formed body is simply used as the raw material. As a result of further studies, the inventors have found that a chip-shaped article formed from a recovered liquid crystal polyester formed body, in which the chip-shaped article has a bulk density of 0.15 to 1.20 g/mL and a maximum length of 3 to 30 mm as an average value, not only can be transported into the kneading part of the cylinder without idling the screw of the extruder, but also can be recycled to produce a high quality recycled liquid crystal polyester formed body, leading to the completion of the present invention.

That is, the present invention may include the following aspects.

### [Aspect 1]

A liquid crystal polyester chip-shaped article including a recovered liquid crystal polyester formed body as a raw material,
wherein the liquid crystal polyester chip-shaped article has a bulk density of 0.15 to 1.20 g/mL (preferably 0.30 to 1.15 g/mL, more preferably 0.55 to 1.10 g/mL, further preferably 0.65 to 1.08 g/mL, and most preferably 0.85 to 1.05 g/mL) and has an average maximum length of 3 to 30 mm (preferably 3.5 to 20 mm, and more preferably 5 to 15 mm).

### [Aspect 2]

The liquid crystal polyester chip-shaped article according to aspect 1, wherein a liquid crystal polyester constituting the liquid crystal polyester chip-shaped article has a ketone bond amount of 0.050 mol% or less (preferably 0.045 mol% or less, and more preferably 0.040 mol% or less).

### [Aspect 3]

The liquid crystal polyester chip-shaped article according to aspect 1 or 2, wherein a liquid crystal polyester constituting the liquid crystal polyester chip-shaped article has a total amount of carboxy end groups of 20 mEq/kg or less (preferably 15 mEq/kg or less, and more preferably 10 mEq/kg or less).

### [Aspect 4]

The liquid crystal polyester chip-shaped article according to any one of aspects 1 to 3, wherein a liquid crystal polyester constituting the liquid crystal polyester chip-shaped article has a total amount of one-end groups of 2 to 100 mEq/kg (preferably 3 to 100 mEq/kg, more preferably 5 to 100 mEq/kg, further preferably 10 to 100 mEq/kg, still further preferably 20 to 100 mEq/kg, particularly preferably 50 to 100 mEq/kg, still particularly preferably 55 to 99 mEq/kg, and still particularly preferably 60 to 85 mEq/kg).

### [Aspect 5]

A method for producing a liquid crystal polyester chip-shaped article, the method at least including:
a preparing step of preparing a recovered liquid crystal polyester formed body as a raw material formed body;
an integrating step of performing an integration process on the raw material formed body or a preliminary formed body obtained by cutting or crushing (grinding) the raw material formed body as necessary, to form an integrated body; and
a cutting step of cutting the integrated body to produce a chip-shaped article having a bulk density of 0.15 to 1.20 g/mL (preferably 0.30 to 1.15 g/mL, more preferably 0.55 to 1.10 g/mL, further preferably 0.65 to 1.08 g/mL, and most preferably 0.85 to 1.05 g/mL) and having an average maximum length of 3 to 30 mm (preferably 3.5 to 20 mm, and more preferably 5 to 15 mm).

### [Aspect 6]

The method according to aspect 5, wherein the integrating step is performed by thermoforming.

### [Aspect 7]

The method according to aspect 5 or 6, wherein a degassing process is performed in the integration step.

### [Aspect 8]

A recycled liquid crystal polyester formed body at least including the liquid crystal polyester chip-shaped article according to any one of aspects 1 to 4 as a raw material.

### [Aspect 9]

The recycled liquid crystal polyester formed body according to aspect 8, being a recycled liquid crystal polyester fiber structure.

### [Aspect 10]

The recycled liquid crystal polyester formed body according to aspect 9, wherein the recycled liquid crystal polyester fiber structure includes a recycled liquid crystal polyester fiber having a single fiber fineness of 50 dtex or less (preferably 15 dtex or less, more preferably 10 dtex or less, and further preferably 7 dtex or less).

### [Aspect 11]

A method for producing a recycled liquid crystal polyester formed body, the method comprising:
a step of preparing at least the liquid crystal polyester chip-shaped article according to any one of aspects 1 to 4 as a raw material; and
a step of melt-extruding the liquid crystal polyester chip-shaped article.

As used herein, the singular forms, "a," "an", and "the" are intended to include plural forms including "at least one", unless the content clearly indicates otherwise. As used herein, the terms "and/or", "at least one", and "one or more" include any and all combinations of the relevant listed items.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

### EFFECT OF THE INVENTION

In the present invention, a chip-shaped article having a specific bulk density and dimension, even including a recovered liquid crystal polyester formed body as a raw material, can be efficiently melt-kneaded using an extruder, and can be recycled to obtain various recycled formed bodies (for example, recycled liquid crystal polyester fiber).

### BRIEF DESCRIPTION OF THE DRAWING

The present invention will become more clearly understood from the following description of preferred examples thereof, when taken in conjunction with the accompanying drawings. However, the examples and the drawings are given only for the purpose of illustration and explanation, and are not to be taken as limiting the scope of the present invention in any way whatsoever, which scope is to be determined by the appended claims.
[Fig. 1] Fig. 1 is a schematic perspective view for illustrating a method for measuring a maximum length of a chip-shaped article according to one embodiment.
[Fig. 2] Fig. 2 is a schematic perspective view for illustrating the method for measuring the maximum length of a chip-shaped article according to one embodiment.
[Fig. 3] Fig. 3 is a photograph of the chip-shaped article obtained in Example 1.

### DESCRIPTION OF EMBODIMENT

### [Liquid Crystal Polyester]

A liquid crystal polyester constituting the liquid crystal polyester chip-shaped article is a polyester capable of forming an optically anisotropic melt phase (liquid crystallinity), and can be recognized, for example, by placing a sample on a hot stage to heat under a nitrogen atmosphere and observing transmitted light through the sample using a polarization microscope. The liquid crystal polyester may be a polyester that mainly includes structural units containing an aromatic group in the main chain, bonds between the structural units being mainly constituted by ester bonds, and is preferably a wholly aromatic liquid crystal polyester, all the structural units of which contain an aromatic group in the main chain. The liquid crystal polyester includes structural units derived from, for example, aromatic diols, aromatic dicarboxylic acids, aromatic hydroxycarboxylic acids, etc. As long as the effects of the present invention are not impaired, the structural units derived from aromatic diols, aromatic dicarboxylic acids, and aromatic hydroxycarboxylic acids are not limited to a specific chemical composition. The liquid crystal polyester may be a liquid crystal polyester amide that includes structural units derived from aromatic diamines, aromatic hydroxy amines, or aromatic aminocarboxylic acids in the range which does not impair the effect of the present invention. For example, preferable structural units may include units shown in Table 1.

**[Table 1]**

| |
|---|
| 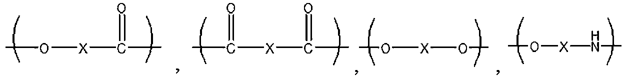 |
| In the formula, X is selected from the following |
| 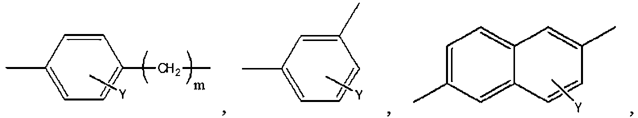 |
| 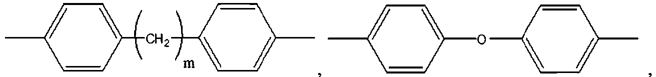 |
| 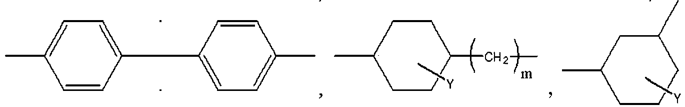 |
| m is an integer from 0 to 2, Y is a substituent selected from hydrogen atom, halogen atoms, alkyl groups, aryl groups, aralkyl groups, alkoxy groups, aryloxy groups, and aralkyloxy groups. |

In the structural units in Table 1, m is an integer from 0 to 2, and Y in the formula independently represents, as from one substituent to the number of substituents in the range of the replaceable maximum number of aromatic ring or a cyclo ring, a hydrogen atom, a halogen atom (for example, fluorine atom, chlorine atom, bromine atom, and iodine atom), an alkyl group (for example, an alkyl group having 1 to 4 carbon atoms such as methyl group, ethyl group, isopropyl group, and t-butyl group), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others.

As more preferable structural units, there may be mentioned structural units as described in Examples (1) to (20) shown in the following Tables 2, 3, and 4. It should be noted that where the structural unit in the formula is a structural unit which can show a plurality of structures, combination of two or more types may be used as structural units for a polymer.

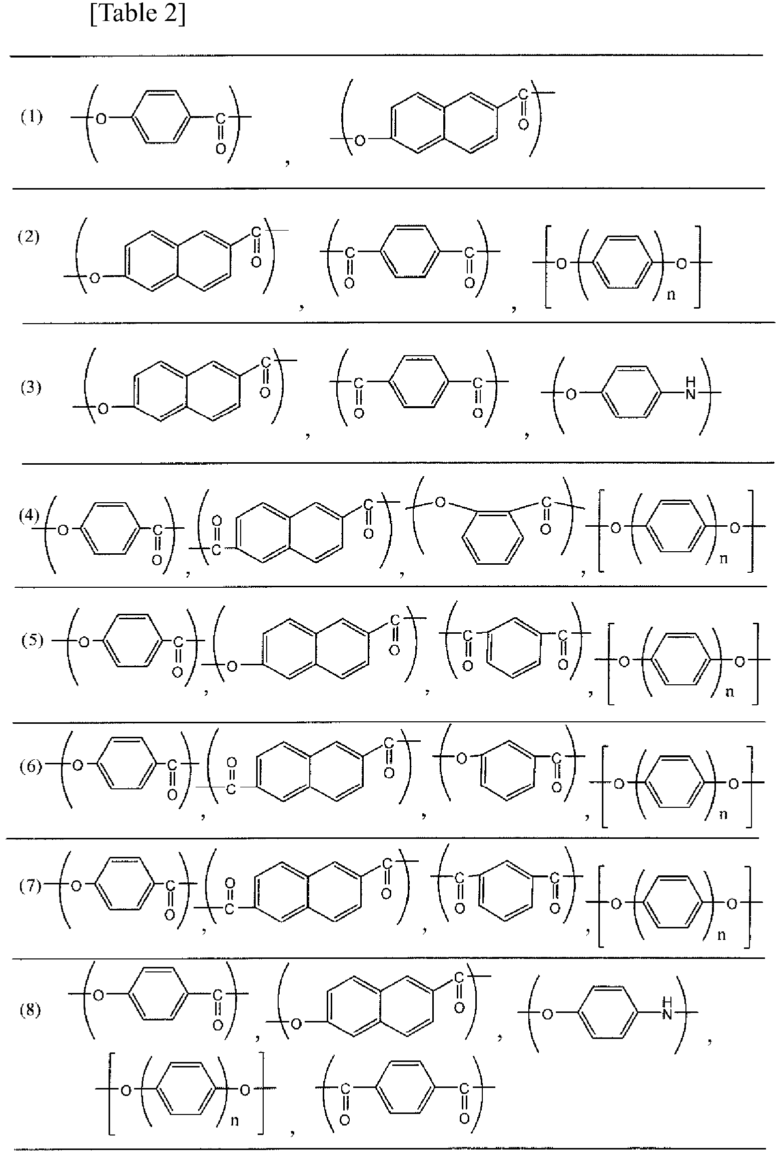

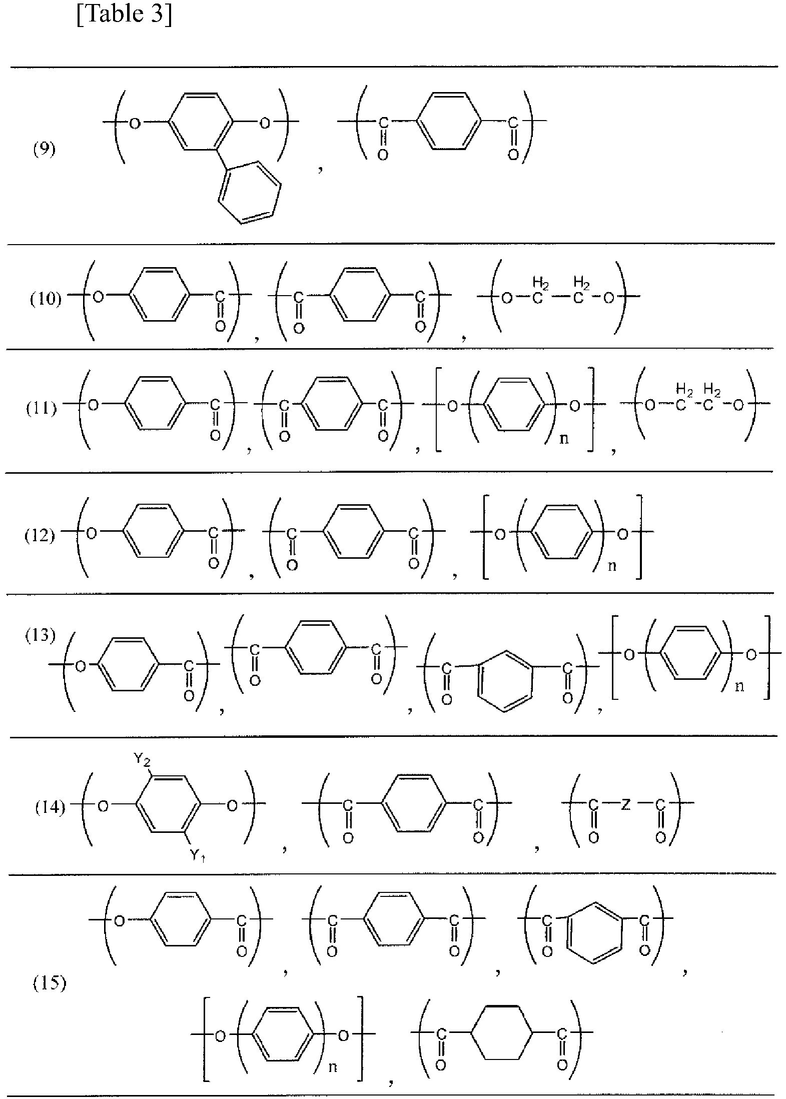

**[Table 4]**

| | |
|---|---|
| (16) | 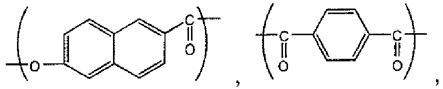 |
| | 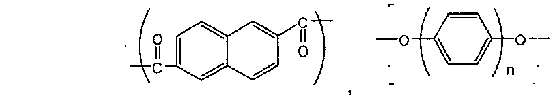 |
| (17) | 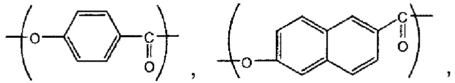 |
| | 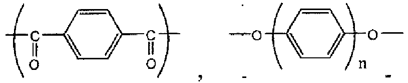 |
| (18) | 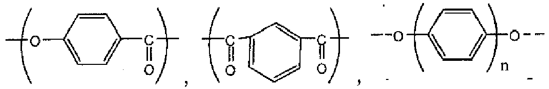 |
| (19) | 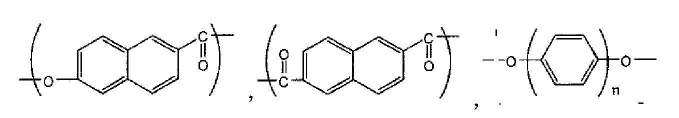 |
| (20) | 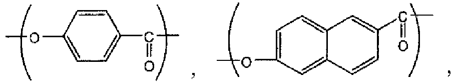 |
| | 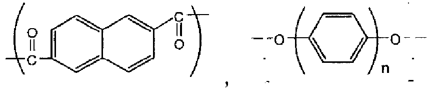 |

In the structural units shown in Tables 2, 3, and 4, n is an integer of 1 or 2, among each of the structural units, n = 1 and n = 2 may independently exist, or may exist in combination; each of the Y₁ and Y₂ independently represents, a hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others. Among these, the preferable one may include a hydrogen atom, a chlorine atom, a bromine atom, and a methyl group.

Z may include substitutional groups denoted by following formulae.

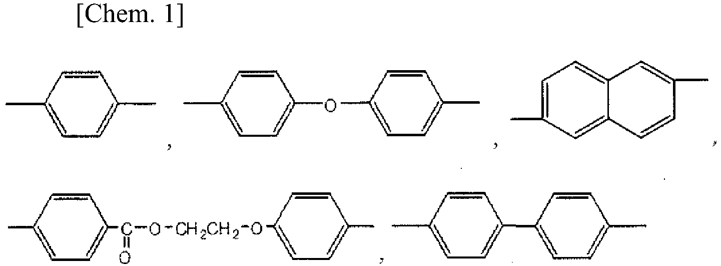

In one embodiment, the liquid crystal polyester may include a structural unit derived from a hydroxycarboxylic acid as a main component. The liquid crystal polyester may preferably include a structural unit (A) derived from hydroxybenzoic acid and a structural unit (B) derived from hydroxy naphthoic acid. For example, the structural unit (A) may have a structural unit derived from 4-hydroxybenzoic acid (the following formula (A)), and the structural unit (B) may have a structural unit derived from 6-hydroxy-2-naphthoic acid (the following formula (B)). In order to improve melt-formability, the ratio of the structural unit (A) and the structural unit (B) may preferably be in a range of former/latter of 9/1 to 1/1, more preferably from 7/1 to 1/1, and still more preferably from 5/1 to 1/1.

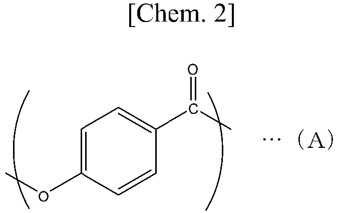

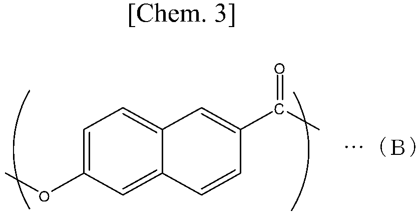

The liquid crystal polyester may include the structural unit derived from 4-hydroxybenzoic acid (structural unit (A)) and/or the structural unit derived from 6-hydroxy-2-naphthoic acid (structural unit (B)), and a total content of the structural unit (A) and the structural unit (B) may be 40 mol% or more, preferably 50 mol% or more, more preferably 70 mol% or more, and further preferably 80 mol% or more, based on the total content of all the structural units.

For example, the liquid crystal polyester may have a melting point of 250°C or higher, preferably 260°C or higher, and more preferably 280°C or higher. On the other hand, for the case where the liquid crystal polyester is recovered and thermoformed in a chip-shape, and/or from the viewpoint of melt-formability, the liquid crystal polyester may have the melting point of 380°C or lower, preferably 360°C or lower, and more preferably 340°C or lower.

In the present specification, the melting point refers to a main endothermic peak temperature determined and observed using a differential scanning calorimeter (DSC) in accordance with the JIS K 7121:2012 test method. Specifically, 4 to 6 mg of a sample is encapsulated in an aluminum pan and taken into the DSC device. Then, the temperature is elevated at a rate of 10°C/min from room temperature (e.g., 25°C) while supplying nitrogen as a carrier gas at a flow rate of 200 mL/min to measure an endothermic peak. Depending on the type of polymer, some polymers may not show a clear peak in the 1st run of DSC measurement. If no clear peak appears in the 1st run of DSC measurement, the sample is heated up to a temperature 50°C higher than the expected flow temperature in a temperature elevation rate of 50°C/min. After keeping the temperature for 3 minutes so as to make the sample completely molten, the sample is cooled at a cooling rate of 80°C/min to 50°C, and then is elevated at 10°C/min to measure the endothermic peak thereof.

It should be noted that the liquid crystal polyester chip-shaped article may contain thermoplastic resins, such as a polyethylene terephthalate, a modified-polyethylene terephthalate, a polyolefin, a polycarbonate, a polyamide, a polyphenylene sulfide, a polyether ether ketone, a fluoro-resin, and others, as long as the effects of the present invention are not impaired. In addition, the liquid crystal polyester chip-shaped article may contain various additives including: inorganic substances such as titanium oxide, kaolin, silica, and barium oxide; carbon black; a colorant such as dyes and pigments; an antioxidant; an ultraviolet-ray absorbent; a light stabilizer; etc.

The liquid crystal polyester chip-shaped article may contain the liquid crystal polyester at a proportion of 50 wt% or more, preferably 80 wt% or more, and more preferably 90 wt% or more. From the viewpoint of improving the recycling rate, a liquid crystal polyester chip-shaped article having a high purity of liquid crystal polyester is preferable, and the liquid crystal polyester chip-shaped article may contain the liquid crystal polyester at a proportion of further preferably 95 wt% or more, and still further preferably 98 wt% or more.

### [Method for Producing Liquid Crystal Polyester Chip-Shaped Article]

For the liquid crystal polyester chip-shaped article of the present invention, used liquid crystal polyester formed bodies, and defective products and plastic wastes (for example, offcuts, residues, burrs, etc.) generated during a production process of a liquid crystal polyester formed body can be recovered to be used as a raw material formed body. Here, examples of the formed body include fibers, films, and various molded products. The recovered plastic waste or the like may be subjected to a selection step such as classification to obtain a chip-shaped article having a bulk density of 0.15 to 1.20 g/mL and an average maximum length of 3 to 30 mm.

For example, when a liquid crystal polyester fiber is used as the raw material formed body, a used liquid crystal polyester fiber product (for example, an untreated yarn; a heat-treated yarn obtained by heat-treating an untreated yarn to proceed with solid-phase polymerization of the liquid crystal polyester and enhance the mechanical properties such as tensile strength; or a fiber structure obtained by processing these yarns), a leftover yarn and a waste yarn of a liquid crystal polyester fiber generated during a production process (for example, a leftover yarn of a liquid crystal polyester fiber on a paper tube or a bobbin), and the like may be recovered and used as a raw material. Examples of commercially available liquid crystal polyester fibers include Vectran UM (trademark) manufactured by KURARAY CO., LTD., Vectran HT (trademark) manufactured by KURARAY CO., LTD., Siveras (trademark) manufactured by Toray Industries, Inc., and Zxion (trademark) manufactured by KB SEIREN LTD.

The leftover yarn and waste yarn of the liquid crystal polyester fiber generated during the production process may be any of a discharged yarn obtained immediately after spinning, an untreated yarn before solid-phase polymerization treatment, and a heat-treated yarn after solid-phase polymerization, and an untreated yarn before being processed into a fiber structure is preferably used because less contaminants or foreign matters are adhered or mixed thereto. The untreated yarn can be obtained as follows: when the untreated yarn is processed into a fiber structure, fibers may be left on a bobbin, and the leftover yarn is collected from a processing plant; when the untreated yarn is moved to a heat treatment step in the production process of the liquid crystal polyester fiber, the leftover untreated yarn (as-spun yarn) is collected; and the like.

When a liquid crystal polyester film is used as a raw material, since the liquid crystal polyester film, which is excellent in low hygroscopicity, heat resistance, chemical resistance, electrical properties, and the like, is often used as an insulating material of a circuit board, a metal-clad laminate in which metal foil is laminated on a liquid crystal polyester film, which is used as a material for producing a circuit board, can be also used as the raw material. Therefore, as the raw material of the liquid crystal polyester film, offcuts generated in a film production process, a metal-clad laminate production process, and a circuit board production process may be collected. Alternatively, the liquid crystal polyester film can be obtained as follows: when the film is processed into a metal-clad laminate, the film may be left on a core for film winding, and the leftover film is collected from a processing plant; when the film is moved to a heat treatment step in the production process of the film, the leftover film before heat treatment (raw film) is collected; and the like.

A step of forming into a chip-shaped article can be appropriately determined depending on the shape of the liquid crystal polyester formed body as a raw material (hereinafter, sometimes abbreviated as raw material formed body).

### (I) Crushing Process and/or Cutting Process

Where the maximum length of the raw material formed body exceeds 30 mm, the raw material formed body is subjected to a crushing process or a cutting process, or a combined process thereof. Where a granular body obtained by the crushing process and/or the cutting process has a bulk density of 0.15 to 1.20 g/mL and a maximum length of 3 to 30 mm, the granular body may be directly used as a chip-shaped article, or the granular body obtained by the crushing process and/or the cutting process, as a preliminary formed body, may be further subjected to an integration process.

For the crushing process and/or the cutting process, for example, scissors, a guillotine cutter, a slitter, a crusher (grinder), or the like can be selected depending on the shape of the raw material formed body.

### (II) Cleaning Process

Prior to the integration process, the raw material formed body or the preliminary formed body may be subjected to a cleaning process to improve the purity of the liquid crystal polyester. Through the cleaning process, for example, additives (for example, oil agent and sizing agent) adhered to the raw material formed body or the preliminary formed body, and other materials (for example, metal foil) adhered to the raw material formed body or the preliminary formed body can be removed. In the cleaning process, the type of a cleaning fluid, the contact time between the cleaning fluid and the raw material formed body or the preliminary formed body, and the like can be adjusted as long as deterioration of the liquid crystal polyester is prevented or reduced.

The cleaning fluid liquid can be selected depending on the material to be removed, and may be any of an acidic solvent, an alkaline solvent, an organic solvent, and an aqueous solvent. These cleaning fluids may be used singly or in combination of two or more. Furthermore, each of the solvents may contain a detergent such as a surfactant as necessary.

For example, various etching solutions may be used to remove a metal material. In order to efficiently remove contaminants and oil agents, an organic solvent, or an aqueous solvent containing a surfactant and/or a solvent may be used.

In the cleaning process, the raw material formed body or the preliminary formed body may be immersed in the cleaning fluid, or the cleaning fluid may be sprayed onto the raw material formed body or the preliminary formed body. The immersion may be performed with a stationary bath (for example, a stretching bath) or a rotary bath (for example, an industrial washing machine).

The crushing process and/or the cutting process, and the cleaning process may be combined. In this case, the order of both processes is not particularly limited, and it is preferable to perform the crushing process and/or the cutting process, and then perform the cleaning process.

### (III) Integration Process

The raw material formed body or the preliminary formed body may be subjected to an integration process. In the integration process, the raw material formed body or the preliminary formed body can be thermoformed and/or adhesion-formed to obtain a formed body (hereinafter, sometimes referred to as integrated body). The integrated body may be a one-dimensional formed body such as a string shape, or may be a two-dimensional formed body such as a sheet shape.

In the thermoforming, the raw material formed body or the preliminary formed body can be integrated by heat treatment. A heating temperature can be appropriately set depending on a melting point of the raw material formed body or the preliminary formed body to be used. Where the melting point of the raw material formed body or the preliminary formed body is defined as Tm, the heating temperature may be, for example, from Tm - 5 to Tm + 40°C, preferably from Tm to Tm + 30°C, and more preferably from Tm + 5 to Tm + 25°C.

Before the thermoforming, if needed, a melting point-examining step of examining a melting point of an object to be heated in advance; and a classification step of classifying the object to be heated according to the examined melting point so as to determine the object to be heated having similar melting point may be performed. The melting point of the target raw material formed body or preliminary formed body is a value measured by the method described in the Examples below.

In the thermoforming step, a moisture content may be reduced in advance in the raw material formed body or the preliminary formed body to be used. For example, the moisture content of the raw material formed body or the preliminary formed body may be 500 ppm or less, preferably 400 ppm or less, more preferably 300 ppm or less, more preferably 200 ppm or less, more preferably 100 ppm or less, and more preferably 50 ppm or less.

Furthermore, in the thermoforming, a hot press process may be performed as necessary. The liquid crystal polyester resin may be fused and integrated by the hot press process. The hot press process may be a single-sheet-fed type or a roll-to-roll type. Specific examples thereof include a method of performing a press process in the form of a sheet with a hot plate; a method of performing a press process in the form of a sheet with a heating roll; and a method of performing a hot press process in the form of a sheet by sandwiching the formed body with a wire mesh and/or a metal belt.

A pressing pressure in the hot press process may be, for example, 0.5 to 20 MPa, preferably 1 to 15 MPa, and more preferably 1.5 to 10 MPa as a surface pressure. A pressing time may be, for example, 1 to 10 minutes, preferably 1.5 to 8 minutes, and more preferably 2 to 7 minutes. In the roll-to-roll type, a value obtained by converting a linear pressure into a surface pressure may be used.

The hot press process may be performed in a single process, or may be performed after a degassing process as necessary.

A degassing press process may be performed as the degassing process as necessary. The degassing press process may be performed under the above-described surface pressure, for example, in the number of pressing of 3 to 20 times and preferably 5 to 15 times. The pressing time per one pressing may be, for example, 1 to 30 seconds, preferably 2 to 25 seconds, and more preferably 3 to 20 seconds.

In the thermoforming, from the viewpoint of preventing a molten liquid crystal polyester resin from adhering to the apparatus to be used, it is preferable to bring the raw material formed body or the preliminary formed body into contact with a release-treated apparatus. For example, a metal plate or a heating roll to be used in the hot press process is preferably subjected to a release treatment such as a fluorine coating and a silicone coating. The press process may be performed through a release material such as a fluorine sheet, a silicone sheet, and a polyimide film.

The degassing process and the thermoforming are preferably performed under an atmosphere of an inert gas or a vacuum.

Where the raw material formed body has a fiber shape, the obtained chip-shaped article may at least partially have a shape derived from a liquid crystal polyester fiber. For example, when the raw material formed bodies are aligned in substantially one direction or randomly aligned and then subjected to a hot press process, the integrated body after the hot press process and the chip-shaped article obtained from the integrated body may have the shape derived from the liquid crystal polyester fiber in some parts (for example, an outer edge).

For example, a fibrous article to be thermoformed may be thermoformed in a state of being aligned in advance. For example, the aligned fibers are twisted, and the twisted fiber bundle may be thermoformed into a rod shape in a hot air furnace. Alternatively, where the raw material formed body has the fiber shape, the fiber bundle obtained by twisting the aligned fibers as necessary may be covered from the outside with a thermoplastic resin sheet (for example, a liquid crystal polyester sheet, and the above-described thermoplastic resin which is compatible with the liquid crystal polyester) or the like, and the covered material may be heated to melt the thermoplastic resin so as to entirely integrate the raw material formed body. The thermoplastic resin sheet may have the same melting point as the melting point of the raw material formed body, and preferably has a melting point lower than the melting point of the raw material formed body.

In one embodiment of the integration process, where the raw material formed body has a long fiber shape or a long film shape, it may be twisted to form a twisted string, and then the twisted string may be compressed to form a pressure-bonded twisted string as the integrated body. Furthermore, heating may be performed before twisting and/or after twisting (for example, during compression), and the raw material formed body is softened by heating so that twisting and/or pressure-bonding can be easily performed. For example, a raw material formed body having a continuous fiber shape may be twisted to form a continuously twisted yarn, then the twisted yarn may be formed by hot press to form an integrated body, and the integrated body may be subjected to the cutting process as described later to form a chip-shaped article having a predetermined dimension. The formation of the twisted yarn, the formation of the integrated body, and the cutting process may be performed with the same apparatus, or may be performed with different apparatuses.

For example, in one embodiment of such an integration process, optionally used is an apparatus for producing a twisted string including: a supply unit that serves as a starting point of twisting a long raw material formed body; and a rotary compression unit that rotates to twist the raw material formed body sent from the supply unit, as well as point compresses the raw material formed body to form recessed indentations so as to form a pressure-bonded twisted string with the recessed indentations. The rotary compression unit may include: a rotation unit; and a compression unit equipped inside the rotation unit. In the supply unit, the raw material formed body is sandwiched to serve as the starting point of twisting the raw material formed body; and in the rotation unit, the raw material formed body is twisted by rotation. In the compression unit, the raw material formed body is sandwiched at a predetermined pressing force between a pair of compression rollers for point compression so that the pressure-bonded twisted string can be formed. In this case, a heating unit and an intermediate feeding unit may be provided between the supply unit and the rotary compression unit (in this case, the intermediate rollers of the intermediate feeding unit serve as the starting point of twisting the raw material formed body). In addition, using an apparatus for producing a chip-shaped article further including a cutting unit to cut the pressure-bonded twisted string sent out from the rotary compression unit into a predetermined length, the cutting process as described later can be performed.

In the adhesion-forming, the raw material formed body or the preliminary formed body can be integrated using an adhesive such as a binder. It should be noted that after the adhesion-forming is once performed, the above-described thermoforming may be further performed as necessary.

In the adhesion-forming, the adhesive may be used within a range where the bulk density of the chip-shaped article can be adjusted. For example, a proportion of the adhesive as the solid content may be 0.1 to 10 wt% and preferably 0.5 to 8 wt% based on a total content of the chip-shaped article.

The adhesive may be applied to the raw material formed body or the preliminary formed body by immersion, coating, or spraying. In particular, where the raw material formed body has the fiber shape, the aligned fibers may be applied with the binder by immersion, coating, or spraying for integration.

The adhesive is not particularly limited to a specific one as long as the raw material formed body or the preliminary formed body can be integrated. Examples thereof include known or conventional adhesives such as a polyurethane-based adhesive, a polysiloxane-based adhesive, a polyamide-based adhesive, a polyolefin-based adhesive, and an epoxy-based adhesive.

### (IV) Cutting Process

The integrated body after integral forming may be subjected to a cutting process as necessary. The cutting process is not particularly limited to a specific one as long as the effects of the present invention are not impaired, and can be performed by, for example, scissors, a guillotine cutter, a fan cutter, a slitter, or the like. By cutting, a chip-shaped article formed into a predetermined dimension can be obtained.

### [Liquid Crystal Polyester Chip-Shaped Article]

The liquid crystal polyester chip-shaped article of the present invention is formed from a recovered (collected) liquid crystal polyester formed body, and has a specific bulk density and dimension.

The liquid crystal polyester chip-shaped article according to one embodiment has the bulk density of 0.15 to 1.20 g/mL, preferably 0.30 to 1.15 g/mL, more preferably 0.55 to 1.10 g/mL, further preferably 0.65 to 1.08 g/mL, and most preferably 0.85 to 1.05 g/mL.

Where the bulk density of the liquid crystal polyester chip-shaped article is 0.15 g/mL or more, the feedability during feeding the chip-shaped article into the extruder and the biting property into the screw of the extruder are excellent, and the melt- kneadability in the extruder can be improved. Where the bulk density is 1.20 g/mL or less, less foreign matter is mixed into the chip-shaped article, and the physical properties of the formed body obtained from the chip-shaped article tend to be improved.

Here, with reference to JIS Z 2504, the bulk density of the liquid crystal polyester chip-shaped article is determined. Specifically, the liquid crystal polyester chip-shaped article is poured into a measurement cup without a funnel, and then the weight of the chip-shaped article in the measurement cup is weighed with an electronic balance without compressing the chip-shaped article in the measurement cup by tapping or the like, and the bulk density thereof is calculated in terms of the inner volume of the measurement cup.

As the dimension of the liquid crystal polyester chip-shaped article according to one embodiment, the average maximum length is 3 to 30 mm, preferably 3.5 to 20 mm, and more preferably 5 to 15 mm. Where the average maximum length is 3 mm or longer, the feedability during feeding the chip-shaped article into the melt-extruder and the biting property into the screw of the extruder are excellent. Where the average maximum length is 30 mm or shorter, the feedability during feeding the chip-shaped article into the melt-extruder and the biting property into the screw of the extruder are excellent.

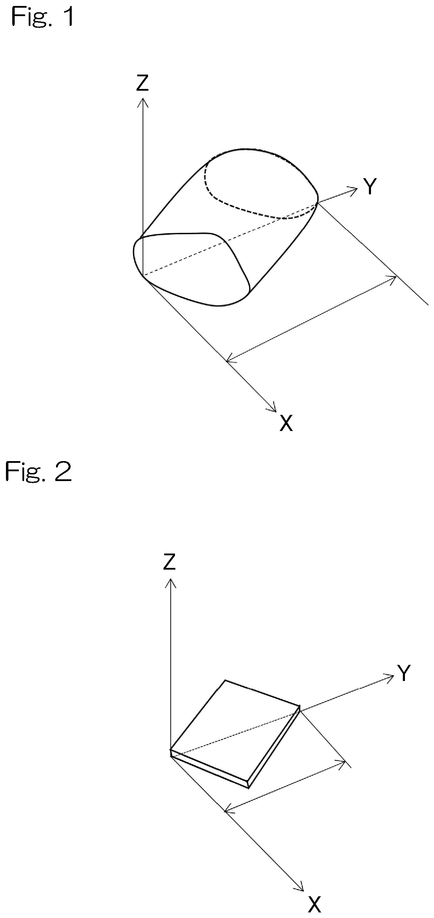

As for the maximum length of the liquid crystal polyester chip-shaped article according to one embodiment, the chip-shaped article is placed on a flat surface, and a projected area thereof is measured for the maximum length from one end to the other end. The maximum length can be measured by a simple method such as a digital caliper, a stereomicroscope with a scale, and an automatic shape measuring instrument. For example, the chip-shaped article illustrated in Fig. 1 is placed such that the longest position of the chip-shaped article is parallel to the Y direction among the longitudinal direction (X direction), the lateral direction (Y direction), and the vertical direction (Z direction). The length in the Y direction of the chip-shaped article is measured as the length of the maximum side. On the other hand, in the chip-shaped article having a square surface illustrated in Fig. 2, the maximum side is the length of the diagonal line of the square.

As the dimension of the liquid crystal polyester chip-shaped article according to one embodiment, the average minimum length may be 0.1 to 10 mm, preferably 0.1 to 8 mm, and more preferably 0.3 to 5 mm. As for the minimum length of the liquid crystal polyester chip-shaped article, the chip-shaped article is placed on a flat surface, and the projected area thereof is measured for the minimum length from one end to the other end. The minimum length can be measured simultaneously with measuring the maximum length. For example, in the chip-shaped article illustrated in Fig. 1 is placed such that the length in the Y direction is the maximum length of the chip-shaped article. In this case, the length in the Z direction is measured as the minimum length of the chip-shaped article. On the other hand, in the rectangular parallelepiped chip-shaped article illustrated in Fig. 2, the minimum side is the height of the rectangular parallelepiped (length of the Z direction). It should be noted that where the chip-shaped article is placed such that the longest position of the chip-shaped article is parallel to the Y direction, the minimum length is not necessarily the length parallel to the X direction or the Z direction, and the shortest position is separately determined.

In the liquid crystal polyester chip-shaped article according to one embodiment, the liquid crystal polyester constituting the liquid crystal polyester chip-shaped article preferably has a ketone bond amount of liquid crystal polyester of 0.050 mol% or less, more preferably 0.045 mol% or less, and further preferably 0.040 mol% or less. In the present specification, the ketone bond amount refers to a ratio of a molar amount of ketone bonds based on a total molar amount of ester bonds and ketone bonds (molar amount of ketone bonds / (molar amount of ester bonds + molar amount of ketone bonds)), and is a value measured by the method described in the Examples below. The lower limit of the ketone bond amount is not particularly limited to a specific one, and may be about 0.001 mol%.

The ketone bond is a heterogeneous bond generated from an ester bond through a side reaction during production of the liquid crystal polyester formed body. The ketone bond amount may increase due to thermal degradation of the liquid crystal polyester, and therefore can be an index of thermal degradation of the chip-shaped article. For example, where a chip-shaped article is obtained by thermoforming, the formation temperature during thermoforming can be lowered to obtain a chip-shaped article in which thermal degradation is suppressed. The obtained chip-shaped article can be handled as an article equivalent to a virgin liquid crystal polyester chip, and a high-quality formed body can be produced by using such a chip-shaped article.

In the liquid crystal polyester chip-shaped article according to one embodiment, from the viewpoint of reducing an amount of gas generation during heating and melting, the liquid crystal polyester constituting the liquid crystal polyester chip-shaped article may have has a total amount of carboxy end groups (hereinafter, referred to as total CEG amount) of, for example, 20 mEq/kg or less, preferably 15 mEq/kg or less, and more preferably 10 mEq/kg or less. The lower limit of the total CEG amount is not particularly limited to a specific one, and may be 1 mEq/kg or more.

The total CEG amount is a value measured by the method described in the Examples below, and is defined as the amount of carboxy end groups of polymer molecules in 1 kg of the chip-shaped article, the polymer molecules mainly constituting the liquid crystal polyester chip-shaped article. For example, as the carboxy end groups in liquid crystal polyester, there may be exemplified carboxy groups that do not participate in reaction and remain in the terminal structural units derived from monomers having carboxy groups, such as aromatic hydroxycarboxylic acids and aromatic dicarboxylic acids.

In the liquid crystal polyester chip-shaped article according to one embodiment, the liquid crystal polyester constituting the liquid crystal polyester chip-shaped article may have a total amount of one-end groups of, for example, 2 to 100 mEq/kg, preferably 3 to 100 mEq/kg, more preferably 5 to 100 mEq/kg, further preferably 10 to 100 mEq/kg, and still further preferably 20 to 100 mEq/kg. Further, from the viewpoint of melt-formability, the liquid crystal polyester constituting the liquid crystal polyester chip-shaped article may have the total amount of one-end groups of 50 to 100 mEq/kg, preferably 55 to 99 mEq/kg, and more preferably 60 to 85 mEq/kg. The total amount of one-end groups indicates the number of polymer chains, and is used as an index for evaluating a molecular weight. There is a tendency that the larger the total amount of one-end groups is, the smaller the molecular weight is; while the smaller the total amount of one-end groups is, the larger the molecular weight is. Considering difficulty to quantify all kinds of end groups constituting the liquid crystal polyester depending on the monomer constitution of the liquid crystal polyester, in the present specification, the total amount of one-end groups is defined as a value obtained by dividing a total amount (mEq/kg) of end groups by a molar ratio of structural units derived from the hydroxycarboxylic acids in the liquid crystal polyester, in which the total amount (mEq/kg) of end groups is a value of carboxy end groups derived from hydroxycarboxylic acids and end groups from which carbon dioxide has been eliminated by decarboxylation reaction, which can occur as a side reaction, from carboxy groups derived from hydroxycarboxylic acids in 1 kg of the liquid crystal polyester chip-shaped article. The total amount of one-end groups can be measured by the method described in the Examples below.

### [Recycled Liquid Crystal Polyester Formed Body]

A recycled liquid crystal polyester formed body according to one embodiment can be produced from the liquid crystal polyester chip-shaped article of the present invention as a material. Examples of the recycled liquid crystal polyester formed body include pellets, fibers, films, and various injection-molded bodies, and these can be obtained by known or conventional production methods.

The method for producing the recycled liquid crystal polyester formed body includes: a step of preparing at least the chip-shaped article as a raw material; and a step of melt-extruding the chip-shaped article.

The step of melt-extruding the chip-shaped article can be performed by a known or conventional method depending on the intended recycled liquid crystal polyester formed body. For example, where pellets are formed, a pelletizing process is performed. In the pelletizing process of the chip-shaped article, in order to suppress thermal degradation of the liquid crystal polyester resin melted in the extruder, melt-kneading is preferably performed where the melt-kneading temperature is set at a temperature equal to or lower than Tm + 30°C, wherein Tm denotes the melting point of the liquid crystal polyester resin. Here, the melt-kneading temperature means the temperature at which a resin is melt-kneaded with the screw of the extruder, specifically, the set temperature of the extruder.

Further, in order to perform degassing during melt-kneading, it is preferable to provide a vent in the extruder, and remove air in the cylinder of the extruder with a vacuum pump. For example, the extruder is divided into a solid zone, a mixed zone of solid and molten resin, and a melt zone. Through a vent port provided in any of the zones, vacuum degassing may be performed at a pressure of, for example, 0 to 90 kPa (preferably 0 to 80 kPa and more preferably 0 to 70 kPa).

Among these, degassing is preferably performed at least in the melt zone, and vacuum degassing may be preferably performed through all of the vent ports.

The melt-kneaded resin is discharged from the extruder and then cut by a known or conventional method such as a strand cut method and a hot cut method, so as to obtain pellets having a predetermined size.

The melt-kneading temperature and the like described in the pelletizing process described above can also be used for fibers, films, and various injection-molded bodies. When melt-kneading is performed, degassing may be performed through the vent described above as necessary.

In the step of melt-extruding the chip-shaped article, a moisture content may be reduced in advance in the chip-shaped article to be used. For example, the moisture content of the chip-shaped article may be 500 ppm or less, preferably 400 ppm or less, more preferably 300 ppm or less, more preferably 200 ppm or less, more preferably 100 ppm or less, and more preferably 50 ppm or less.

The recycled liquid crystal polyester formed body according to one embodiment may contain, in addition to the liquid crystal polyester chip-shaped article, various thermoplastic resins, such as a polyethylene terephthalate, a modified-polyethylene terephthalate, a polyolefin, a polycarbonate, a polyamide, a polyphenylene sulfide, a polyether ether ketone, a fluoro-resin, and others, as long as the effects of the present invention are not impaired. In addition, the recycled liquid crystal polyester formed body may contain various additives including: inorganic substances such as titanium oxide, kaolin, silica, and barium oxide; carbon black; a colorant such as dyes and pigments; an antioxidant; an ultraviolet-ray absorbent; a light stabilizer; etc.

The recycled liquid crystal polyester formed body according to one embodiment may contain a virgin liquid crystal polyester resin. The proportion of the virgin liquid crystal polyester resin in the recycled liquid crystal polyester formed body may be 5 to 97 wt%, preferably 10 to 96 wt%, and more preferably 20 to 95 wt%.

The recycled liquid crystal polyester formed body according to one embodiment may have the ketone bond amount of, preferably 0.050 mol% or less, more preferably 0.045 mol% or less, and further preferably 0.040 mol% or less, from the viewpoint of the physical properties of the formed body. The lower limit of the ketone bond amount is not particularly limited to a specific one, and may be, for example, 0.0001 mol% or more.

In a cut surface of the recycled liquid crystal polyester formed body according to one embodiment, at least one atom selected from the group consisting of a phosphorus atom and a sulfur atom may be uniformly distributed. These atoms may be contained as a component to be adhered to the surface of the raw material formed body, such as oil agents. For example, phosphorus atoms are applied on the surface of the raw material formed body as a component of a general antistatic agent, and therefore, in the raw material formed body, phosphorus atoms are locally distributed on the surface rather than inside the formed body. On the other hand, as for the recycled liquid crystal polyester formed body, where these atoms derived from the recovered raw material formed body are mixed into the chip-shaped article, these atoms are uniformly distributed not only on the surface but also inside the recycled liquid crystal polyester formed body formed from the chip-shaped article. Therefore, the distribution state of these atoms at the cut surface can be used for traceability of being the recycled liquid crystal polyester formed body. The distribution state of these atoms in the fiber cross section can be examined by time-of-flight secondary ion mass spectrometry (TOF-SIMS).

### (Recycled Liquid Crystal Polyester Fiber)

The recycled liquid crystal polyester formed body according to one embodiment may be a recycled liquid crystal polyester fiber. The recycled liquid crystal polyester fiber may be a monocomponent fiber made from one component of the liquid crystal polyester chip-shaped article as long as the effects of the present invention are not impaired. Alternatively, the recycled liquid crystal polyester fiber may be a mixed spun fiber obtained by mixing and spinning the liquid crystal polyester chip-shaped article with a virgin liquid crystal polyester resin, various thermoplastic resins, and/or various additives.

The recycled liquid crystal polyester fiber according to one embodiment may be a non-composite spun fiber or may be a composite spun fiber. The composite spun fiber may be a composite spun fiber obtained by simultaneously spinning the liquid crystal polyester chip-shaped article, various thermoplastic resins, and various additives from separate spinnerets. Such a composite spun fiber may be various composite spun fibers such as sea-island type, core-sheath type, and side-by-side type. Each component in the core-sheath type and the side-by-side type may further form a sea-island structure as necessary.

For example, a method for producing a recycled liquid crystal polyester filament may at least include a spinning step of melt-spinning a liquid crystal polyester chip-shaped article to obtain an as-spun fiber.

In the spinning step, the liquid crystal polyester chip-shaped article is fed into an extruder and is melt-kneaded in the extruder. Then, the melt-kneaded material of the liquid crystal polyester is conveyed to a spinning head and discharged through a nozzle. The obtained yarn is wound, whereby an as-spun fiber can be obtained. During winding, an oil agent may be applied from the viewpoint of preventing static electricity.

As the extruder, known extruders such as single-screw extruders and multi-screw extruders (twin- or more-screw extruders) can be used, and twin-screw extruders are preferable from the viewpoint of improving biting property, kneading property, and degassing property.

As a method for feeding the chip-shaped article into an extruder, the chip-shaped article may be fed from a hopper, or a known feeding method such as a volumetric feeder, a gravimetric feeder, and air feeding method may be employed. From the viewpoint of weighing, it is preferable to use the gravimetric feeder.

Melt-spinning can be performed by a known or conventional method, and the melt-kneaded material can be discharged from the nozzle of the spinning head, and wound by a godet roller or the like to obtain an as-spun fiber.

In the recycled liquid crystal polyester filament as the as-spun fiber, the liquid crystal polyester may have a ketone bond amount of preferably 0.050 mol% or less, more preferably 0.045 mol% or less, and further preferably 0.040 mol% or less.

In the recycled liquid crystal polyester filament as the as-spun fiber, the liquid crystal polyester may have a total CEG amount of, for example, 20 mEq/kg or less, preferably 15 mEq/kg or less, and more preferably 10 mEq/kg or less. The lower limit of the total CEG amount is not particularly limited to a specific one, and may be 1 mEq/kg or more. Although the relationship how the carboxy groups at the molecular terminals of the liquid crystal polyesters exert effect on the reaction in solid-phase polymerization is not clear, when the as-spun fiber having the total CEG amount within such a range is subjected to heat treatment, it is possible to obtain a heat-treated fiber having excellent mechanical properties through heat treatment at a low temperature for a short time.

In the recycled liquid crystal polyester filament as the as-spun fiber, the liquid crystal polyester may have a total amount of one-end groups of, for example, 50 to 100 mEq/kg, preferably 55 to 99 mEq/kg, and more preferably 60 to 85 mEq/kg. When the as-spun fiber having the total amount of one-end groups within the range is subjected to heat treatment, solid-phase polymerization can be advanced so as to decrease the total amount of one-end groups (i.e., increase the molecular weight).

The method for producing the recycled liquid crystal polyester filament may further include a heat-treating step of heat-treating the obtained as-spun fiber. By performing heat treatment on the as-spun fiber, solid phase polymerization of the liquid crystal polyester can be advanced so as to improve mechanical properties (for example, tensile strength). In the heat-treating step, the method of the heat treatment is not particularly limited to a specific one, and may be, for example, a batch-type heat treatment or a continuous heat treatment by conveyance.

For example, the batch-type heat treatment may be carried out in a state where the as-spun fiber is wound onto a bobbin in the form of a package, or in a state of hank as well as tow. The heat treatment may be preferably carried out in a package because it can be carried out in simpler equipment and improved productivity. The bobbin needs to be endurable to a temperature of solid phase polymerization, and may be preferably from a metal, such as aluminum, brass, iron, and stainless steel.

In the case of the continuous heat treatment by conveyance, the conveyance method may be carried out by either contact conveyance (for example, a conveyor type, a support roll type, a heated roller type), or non-contact conveyance (a roll-to-roll type). The processing course may be linear or nonlinear, and may be arranged using a folding roller and/or a guide to suitably change a length, an angle, a curvature of processing course, etc.

For the heat-treating step, a publicly known method can be used, and examples thereof include atmosphere heating, contact heating, and other heating procedure. Preferable atmosphere may include an atmosphere such as air, inactive gas (for example, nitrogen, argon), or a combined air thereof. In addition, there is no problem even if the heat treatment is carried out under vacuum.

In the method for producing the recycled liquid crystal polyester filament, for example, in order to improve bundling properties of fibers and to prevent fibers from fusing during the heat treatment, an oil agent may be applied before the heat-treating step. In addition, after the heat treatment, a finishing oil agent may be applied as appropriate depending on the application of the recycled liquid crystal polyester filament.

The recycled liquid crystal polyester filament according to one embodiment may be a monofilament or a multifilament. In the case of multifilament, the number of filaments may be adjusted depending on the application, etc. For example, the number of filaments may be 2 to 1000 filaments, preferably 3 to 600 filaments, more preferably 4 to 300 filaments, and further preferably 5 to 100 filaments.

The recycled liquid crystal polyester filament according to one embodiment may have an adjusted single fiber fineness depending on the application, etc. The single fiber fineness may be, for example, 50 dtex or less, preferably 15 dtex or less, and more preferably 10 dtex or less. In order to obtain a flexible fiber structure, the single fiber fineness is preferably a low fineness and may be, for example, 7 dtex or less. On the other hand, the lower limit of the single fiber fineness is not particularly limited to a specific one, and may be, for example, 0.01 dtex. The single fiber fineness is a value measured by the method described in the Examples below.

The recycled liquid crystal polyester filament according to one embodiment may have an adjusted total fineness depending on the application, etc. The total fineness may be, for example, 2000 dtex or less, preferably 1000 dtex or less, more preferably 600 dtex or less, and further preferably 300 dtex or less. In order to obtain a flexible fiber structure, a conductive yarn having a smaller fiber diameter is preferable, and the total fineness is preferably a low fineness. The lower limit of the total fineness is not particularly limited to a specific one, and may be, for example, about 1 dtex.

The recycled liquid crystal polyester filament according to one embodiment may have a tensile strength of, in the case of an untreated fiber, 6 cN/dtex or more, preferably 7 cN/dtex or more, and more preferably 8 cN/dtex or more. In the case of a heat-treated fiber, the tensile strength may be 16 cN/dtex or more, preferably 17 cN/dtex or more, and more preferably 18 cN/dtex or more.

In a cut surface of the recycled liquid crystal polyester fiber according to one embodiment, inorganic particles may be uniformly distributed. For example, in general, the liquid crystal polyester fiber may include inorganic particles as a component in an oil agent to be adhered to the surface. Where the inorganic particles derived from the recovered raw material formed body are mixed into the chip-shaped article, the inorganic particles are uniformly distributed not only on the surface but also inside the recycled liquid crystal polyester fiber formed from the chip-shaped article. Therefore, the distribution state of the inorganic particles at the cut surface can be used for traceability of being the recycled liquid crystal polyester fiber. Examples of the inorganic particles include minerals; metal hydroxides such as magnesium hydroxide; metal oxides such as silica and alumina; carbonate compounds such as calcium carbonate and barium carbonate; and sulfate compounds such as calcium sulfate and barium sulfate, as well as carbon black. As the minerals, a silicate mineral is preferable, and a phyllosilicate having a layered structure is particularly preferable. Examples of the phyllosilicate include kaolinite, halloysite, serpentine, garnierite, smectite group, pyrophyllite, talc, and mica, and among these, talc and mica are preferably used in consideration of easy availability.

### (Recycled Liquid Crystal Polyester Fiber Structure)

The recycled liquid crystal polyester formed body may be a recycled liquid crystal polyester fiber structure including the recycled liquid crystal polyester fiber. Examples of the recycled liquid crystal polyester fiber structure include, as well as the recycled liquid crystal polyester filament described above, linear articles such as staple fibers, short-cut fibers, filament yarns, spun yarns, strings, twisted yarns, and ropes; and sheet articles such as woven fabrics, knitted fabrics, and nonwoven fabrics. Such a fiber structure can be produced by a known method using the recycled polyester filament of the present invention.

The recycled liquid crystal polyester fiber structure according to one embodiment may be made by combining the recycled liquid crystal polyester fibers with other fibers. The fiber structure may be, for example, a combined yarn using the recycled liquid crystal polyester fibers and other fibers (e.g., a commingled yarn made from the recycled liquid crystal polyester fibers and other fibers, or the like); and a blend fabric using the recycled liquid crystal polyester fibers and other fibers (e.g., a combined fabric in which the recycled liquid crystal polyester fibers and other fibers are used in combination, a layered material in which a fabric of the recycled liquid crystal polyester fibers and a fabric of other fibers are used in combination, or the like).

For example, in a composite material containing reinforcing fibers and a matrix component, the recycled liquid crystal polyester fibers may be used as the reinforcing fibers, or may be used as the matrix component. Where the recycled liquid crystal polyester fibers are used as the matrix component, the recycled liquid crystal polyester fibers may be used for forming a blend fabric with reinforcing fibers and then the blend fabric may be heat-treated to melt the recycled liquid crystal polyester fibers so as to produce the composite material. In the case of using the fiber structure to produce a composite material, the fiber structure may be a combined yarn or blend fabric, including heat-fusible fibers which form the matrix of the composite material as other fibers.

The recycled liquid crystal polyester fiber structure according to the present invention can be used for various applications such as electrical and electronic component materials, general industrial materials, various reinforcing materials, and protective clothing.

### EXAMPLES

Hereinafter, the present invention will be demonstrated by way of some examples that are presented only for the sake of illustration, which are not to be construed as limiting the scope of the present invention. It should be noted that in the following Examples and Comparative Examples, various properties were evaluated in the following manners.

### (Bulk Density)

With reference to JIS Z 2504, a chip-shaped article was once added to a 500 mL beaker, then the beaker was tilted to pour the chip-shaped article by free fall into a 500 mL measurement cup having an inner diameter of 85 mm, and pouring the measurement sample was stopped immediately after the chip-shaped article filled and started to overflow the measurement cup. Thereafter, the chip-shaped article protruding along the upper end of the measurement cup was scraped off flat by one operation, taking care not to compress the chip-shaped article or shake or vibrate the measurement cup. Then, the weight of the liquid crystal polyester chip-shaped article in the measurement cup was weighed with an electronic balance to calculate a bulk density (g/mL) per 500 mL.

### (Average Maximum Length and Average Minimum Length)

A chip-shaped article was placed on a flat surface, and the length of the longest position of the chip-shaped article was measured with a digital caliper to determine a maximum length (mm). Similarly, the length of the shortest position of the chip-shaped article was measured to determine a minimum length (mm). Ten chip-shaped article samples each were measured for the maximum length and the minimum length to calculate the average values, respectively.

### (Melting Point of Resin)

In accordance with JIS K 7121:2012 test method, a melting point was determined as a main endothermic peak temperature observed in measurement using a differential scanning calorimeter (DSC; "DSC60A Plus", produced by SHIMADZU CORPORATION). Specifically, 4 to 6 mg of a sample was taken and sealed in an aluminum pan and taken into the DSC device. Then, the temperature was elevated at a rate of 10 °C/min from 25°C while supplying nitrogen as a carrier gas at a flow rate of 200 mL/min to measure an endothermic peak attributed to the liquid crystal polyester.

### (Total Fineness and Single Fiber Fineness)

In accordance with 8.3.1 Method A in JIS L 1013: 2010, a liquid crystal polyester fiber was reeled into a hank (100 m in total) with 100 rounds each of which had 1 meter using a sizing reel "Wrap Reel by Motor Driven" produced by DAIEI KAGAKU SEIKI MFG. Co., Ltd., to measure a weight of the liquid crystal polyester fiber. The measurement was conducted twice for each sample. Each of the weights (g) was multiplied by 100, and the average value was regarded as a total fineness (dtex) of the liquid crystal polyester fiber. Thus-obtained total fineness was divided by the number of filaments in the liquid crystal polyester fibers so as to give a single-fiber fineness (dtex).

### (Tensile Strength)

With reference to JIS L 1013: 2010 8.5.1, using an autograph "AGS-100B" produced by SHIMADZU CORPORATION, a tensile test was carried out 10 times for each sample yarn under the conditions of a test sample length of 20 cm and a tensile speed of 10 cm/min to obtain an average tensile force (cN), and a tensile strength (cN/dtex) was calculated by dividing the average tensile force (cN) by the total fineness (dtex) measured by the above-described method.

### (Ketone Bond Amount)

Ketone bond amount was calculated by the pyrolysis-gas chromatography method described in Polymer Degradation and Stability, 76, 85-94 (2002). Specifically, a liquid crystal polyester chip-shaped article sample or a liquid crystal polyester fiber sample was heated using a thermal decomposition device ("PY2020iD" produced by Frontier Laboratories Ltd.) in the presence of tetramethylammonium hydroxide (TMAH) so as to generate a gas by pyrolysis/methylation. The generated gas was analyzed using a gas chromatography ("GC-6890N" produced by Agilent Technologies, Inc.), and the ketone bond amount (mol%) was calculated from a peak area derived from ketone bonds and a peak area derived from ester bonds.

### (Total CEG Amount)

A liquid crystal polyester chip-shaped article sample or a liquid crystal polyester fiber sample was subjected to freeze-grinding until the sample reached d90 = 100 µm or less, then to the ground sample was added an excess amount of n-propylamine, followed by heating under agitation at 40°C for 90 minutes to decompose the sample. In this process, ester bonds present inside the polymer chain are decomposed into carboxylic acid n-propyl amides and hydroxy groups; while carboxy end groups (CEG) and hydroxy end groups in the polymer chain are unchanged from the carboxy groups and hydroxy groups. Therefore, the decomposition products were separated by the HPLC method, and peak areas of the separated decomposition products with carboxy groups were compared with calibration curves prepared by HPLC analysis of the respective standard samples so as to quantify the amount (mEq/kg) of the carboxy end groups derived from each of the monomers. The measurement device and measurement conditions of the HPLC method are as follows.

For example, the amount of CEG derived from monovalent carboxylic acids such as 4-hydroxybenzoic acid and 6-hydroxy-2-naphthoic acid can be determined by directly quantifying 4-hydroxybenzoic acid and 6-hydroxy-2-naphthoic acid. The amount of CEG derived from divalent carboxylic acids such as terephthalic acid, isophthalic acid, and 2,6-naphthalene dicarboxylic acid can be determined by quantifying the amount of amidation products in which one of two carboxy groups is amidated, such as terephthalic acid mono-n-propyl amide, isophthalic acid mono-n-propyl amide, or 2,6-naphthalene dicarboxylic acid mono-n-propyl amide.

The sum of the amounts of all carboxy end groups contained in each sample was regarded as the total carboxy end group amount (total CEG amount) the sample.

### (Total Amount of One-End Groups)

In the same way as the measurement of the above-mentioned total CEG amount, the liquid crystal polyester chip-shaped article sample or the liquid crystal polyester fiber sample was decomposed with n-propylamine to determine the total amount of end groups (mEq/kg) of both carboxy end groups derived from hydroxycarboxylic acids and end groups generated by decarboxylation reaction of carboxy groups derived from hydroxycarboxylic acids. For example, the amount of end groups derived from 4-hydroxybenzoic acid can be determined by quantifying 4-hydroxybenzoic acid and phenol, and the amount of end groups derived from 6-hydroxy-2-naphthoic acid can be determined by quantifying 6-hydroxy-2-naphthoic acid and 2-naphthol. In order to take the amounts of end groups other than hydroxycarboxylic acids, such as end groups derived from diols and dicarboxylic acids into consideration, the total amount of end groups derived from hydroxycarboxylic acids was divided by a molar ratio of structural units derived from hydroxycarboxylic acids in the liquid crystal polyester of the sample, and the thus obtained value was regarded as the total amount of one-end groups (mEq/kg) of the sample.

### [Example 1]

Virgin chips of a liquid crystal polyester (melting point: 278°C) having a structural unit derived from 4-hydroxybenzoic acid and a structural unit derived from 6-hydroxy-2-naphthoic acid at a ratio of 73/27 (mol%) were dried by hot air at 120°C for at least 4 hours. Then, the virgin chips were fed into a twin-screw extruder (Φ 15 mm) (produced by TECHNOVEL CORPORATION) to be melt-kneaded, and the melt-kneaded material was conveyed to a spinning head. The spinning head was equipped with a spinneret having 50 holes each having a hole diameter of 0.10 mmφ, and the melt-kneaded material was discharged at a spinning head temperature of 320°C and a discharge rate of 28 g/min and wound onto a bobbin at a winding rate of 1000 m/min to obtain ten bobbins of as-spun yarn of liquid crystal polyester fibers (untreated yarn), each bobbin having 5 kg of the as-spun yarn.

In order to subject the obtained as-spun yarn to a heat treatment at 270°C for 16 hours under a nitrogen atmosphere, 4 kg of the as-spun yarn was unwound from each bobbin. Thereby, ten bobbins each having 1 kg of leftover yarn were obtained. The leftover yarn was cut on the bobbin using a cutter knife, and liquid crystal polyester fibers having a length of about 10 cm were collected so as to obtain a recovered raw material formed body.

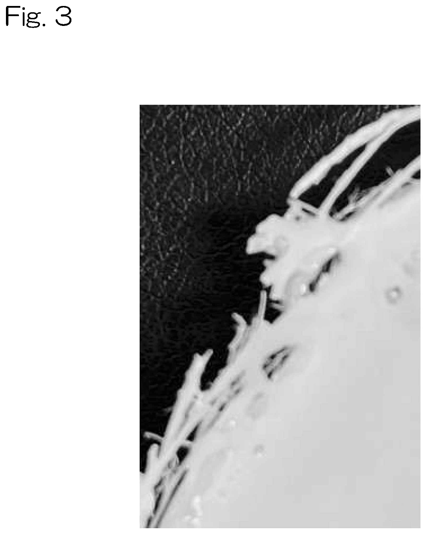

Next, a polyimide film as a heat-resistant release material was disposed on a metal plate, and a metal frame (12 cm long, 12 cm wide, 1.5 mm thick) was further disposed on the polyimide film. The liquid crystal polyester fibers as the raw material formed body were aligned and placed inside the metal frame, and another polyimide film was placed thereon. These were sandwiched between metal hot plates disposed above and below, the recovered liquid crystal polyester fibers were hot-pressed at 300°C and 2.2 MPa for 10 seconds, which was repeated 10 times for degassing, and then hot-pressed for 3 minutes. Following the hot pressing, the liquid crystal polyester fibers were transferred together with the metal frame to a cold press machine, and cooled to obtain a sheet article including the recovered liquid crystal polyester fibers as a raw material. The obtained sheet article was cut using a guillotine cutter to obtain a chip-shaped article having a square prism shape with a thickness of about 1.5 mm, a long side of about 10 mm, and a short side of about 3 mm. The chip-shaped article had an average maximum length of 10.4 mm and a bulk density of 0.80 g/mL. Fig. 3 shows a photograph of the obtained chip-shaped article. As shown in Fig. 3, the chip-shaped article has a shape derived from fibers at the outer edge.

The obtained chip-shaped article was dried by hot air at 120°C for at least 4 hours, and then fed into a twin-screw extruder (Φ 15 mm) (produced by TECHNOVEL CORPORATION). The fed chip-shaped article was successfully melt-kneaded at 300°C without idling the screw of the extruder, and the melt-kneaded material was successfully conveyed to a spinning head. The spinning head was equipped with a spinneret having 50 holes each having a hole diameter of 0.10 mmφ, and the melt-kneaded material was discharged at a spinning head temperature of 330°C and a discharge rate of 28 g/min and wound onto a bobbin at a winding rate of 1000 m/min to obtain as-spun yarn of liquid crystal polyester filaments.

Furthermore, 500 m of the as-spun yarn obtained here was rewound onto an aluminum bobbin at a winding density of 0.6 g/cm³, and subjected to a heat treatment under a nitrogen atmosphere using a closed oven at 300°C for 16 hours to obtain a heat-treated yarn of recycled liquid crystal polyester filaments. Table 5 shows the physical properties of the obtained recycled liquid crystal polyester fiber and the chip-shaped article used therefor.

### [Reference Example]

In the same manner as in Example 1, virgin chips (average maximum length: 0.63 mm; bulk density: 0.67 g/mL) of a liquid crystal polyester (melting point: 278°C) having a structural unit derived from 4-hydroxybenzoic acid and a structural unit derived from 6-hydroxy-2-naphthoic acid at a ratio of 73/27 (mol%) were melt-spun. The obtained as-spun yarn was rewound onto an aluminum bobbin at a winding density of 0.6 g/cm³, and subjected to a heat treatment under a nitrogen atmosphere using a closed oven at 270°C for 16 hours to obtain a heat-treated yarn of recycled liquid crystal polyester filaments. Table 5 shows the physical properties of the obtained recycled liquid crystal polyester fiber and the chip-shaped article used therefor.

### [Examples 2 and 3]

An as-spun yarn and a heat-treated yarn of the recycled liquid crystal polyester filaments were obtained in the same manner as in Example 1 except that the chip-shaped article obtained in Example 1 and the virgin chip obtained in Reference Example were mixed in the proportion shown in Table 5, dried by hot air at 120°C for at least 4 hours, and then fed into a twin-screw extruder (Φ 15 mm). Table 5 shows the physical properties of the obtained recycled liquid crystal polyester fiber and the chip-shaped article used therefor.

### [Example 4]

Ten bobbins each having 1 kg of leftover yarn of as-spun yarn obtained in Example 1 were set on an unwinding creel and ten leftover yarns were unwound and bundled into one. The bundle was passed through a bath to which a polyurethane-based binder (SUPERFLEX 126, manufactured by DKS Co. Ltd.) was added, and subsequently dried through a hot air furnace set at 190°C so as to obtain a liquid crystal polyester fiber bundle applied with a binder in a solid content of 1 wt%. The obtained liquid crystal polyester fiber bundle was cut using a guillotine cutter to obtain a chip-shaped article with a thickness of about 2 mm, a width of about 5 mm, and a length of about 5 mm (average maximum length: 7.0 mm). An as-spun yarn and a heat-treated yarn of the recycled liquid crystal polyester filaments were obtained in the same manner as in Example 1 except that the obtained chip-shaped article was used. Table 5 shows the physical properties of the obtained recycled liquid crystal polyester fiber and the chip-shaped article used therefor.

### [Example 5]

An as-spun yarn and a heat-treated yarn of the recycled liquid crystal polyester filaments were obtained in the same manner as in Example 1 except that in the operation of Example 1 that the recovered liquid crystal polyester fibers obtained by cutting the leftover yarn using a cutter knife were sandwiched between metal hot plates and repeatedly hot-pressed at 300°C and 2.2 MPa for 10 seconds 10 times for degassing, the hot-pressing time was changed into 30 seconds. Table 5 shows the physical properties of the obtained recycled liquid crystal polyester fiber and the chip-shaped article used therefor.

### [Example 6]

5 kg of the as-spun yarn (untreated yarn) of the liquid crystal polyester fiber obtained in Example 1 was subjected to heat treatment at 220°C for 4 hours under a nitrogen atmosphere and cut on the bobbin using a cutter knife, and liquid crystal polyester fibers having a length of about 10 cm were collected so as to obtain a recovered raw material formed body. Subsequently, the chip-shaped article was produced in the same manner as in Example 1.

The obtained chip-shaped article was dried by hot air at 120°C for at least 4 hours, and then fed into a twin-screw extruder (Φ 15 mm) (produced by TECHNOVEL CORPORATION). The fed chip-shaped article was successfully melt-kneaded at 300°C without idling the screw of the extruder, and the melt-kneaded material was successfully conveyed to a spinning head. The spinning head was equipped with a spinneret having 50 holes each having a hole diameter of 0.10 mmφ, and the melt-kneaded material was discharged at a spinning head temperature of 330°C and a discharge rate of 28 g/min and wound onto a bobbin at a winding rate of 1000 m/min to obtain as-spun yarn of liquid crystal polyester filaments. Thereafter, heat treatment was performed in the same manner as in Example 1 to obtain a heat-treated yarn of recycled liquid crystal polyester filaments. Table 5 shows the physical properties of the obtained recycled liquid crystal polyester fiber and the chip-shaped article used therefor.

### [Comparative Example 1]

When the leftover yarn was cut on the bobbin using a cutter knife in Example 1, the length of the leftover yarn was changed into 20 mm, and the short-cut yarn having a length of 20 mm was used as the chip-shaped article and was attempted to be melt-spun in the same manner as in Example 1. However, the chip-shaped article was not bitten into the extruder, and an as-spun yarn could not be obtained. Table 5 shows the physical properties of the chip-shaped article used spinning.

### [Comparative Example 2]

Ten bobbins each having 1 kg of leftover yarn of as-spun yarn obtained in Example 1 were set on an unwinding creel and ten leftover yarns were unwound and bundled into one. The bundle was passed through a bath to which a polyurethane-based binder (SUPERFLEX 126, manufactured by DKS Co. Ltd.) was added, and subsequently dried through a hot air furnace set at 190°C so as to obtain a liquid crystal polyester fiber bundle applied with a binder in a solid content of 20 wt%. The obtained liquid crystal polyester fiber bundle was cut using a guillotine cutter to obtain a chip-shaped article with a thickness of about 2 mm, a width of about 5 mm, and a length of about 5 mm (average maximum length: 7.0 mm). The obtained chip-shaped article was attempted to be melt-spun in the same manner as in Example 1. However, breaks in single fibers occurred frequently, and an as-spun yarn could not be obtained, presumably because the bulk density was too large due to the presence of the binder, and melt-kneading could not be performed sufficiently. Table 5 shows the physical properties of the chip-shaped article used spinning.

### [Comparative Example 3]

The leftover yarn cut on the bobbin using a cutter knife in Example 1 was crushed with a crusher (mesh: 8 mm), and the crushed material was used as the chip-shaped article and was attempted to be melt-spun in the same manner as in Example 1. However, since the bulk density and the average maximum length were smaller, the chip-shaped article was not bitten into the extruder, and an as-spun yarn could not be obtained. Table 5 shows the physical properties of the chip-shaped article used spinning.

### [Comparative Example 4]

The obtained sheet article including the recovered liquid crystal polyester fibers as a raw material, which was obtained in the same manner as in Example 1, was cut using a guillotine cutter to obtain a chip-shaped article having a square prism shape with a thickness of about 1.5 mm, a long side of about 30 mm, and a short side of about 30 mm (average maximum length: 42.3 mm). The obtained chip-shaped article was attempted to be melt-spun in the same manner as in Example 1. However, the chip-shaped article was not bitten into the extruder, and an as-spun yarn could not be obtained. Table 5 shows the physical properties of the chip-shaped article used spinning.

**[Table 5]**

| | | Example 1 | Example 2 | Example 3 | Example 4 | Example 5 | Example 6 |
|---|---|---|---|---|---|---|---|
| Chip-shaped article | Bulk density [g/mL] | 0.50 | 0.50 | 0.50 | 0.80 | 0.50 | 0.50 |
| | Average maximum length [mm] | 10.4 | 10.4 | 10.4 | 7 | 10.4 | 10.4 |
| | Average minimum length [mm] | 1.5 | 1.5 | 1.5 | 1.5 | 1.5 | 1.5 |
| | Forming method | Thermoforming | Thermoforming | Thermoforming | Binder (1%) | Thermoforming | Thermoforming |
| | Degassing press (10 times) | Performed | Performed | Performed | - | Performed | Performed |
| | Total CEG amount [mEq/kg] | 7.25 | 7.25 | 7.25 | 6.60 | 7.23 | 4.55 |
| | Total amount of one-end groups [mEq/kg] | 72.1 | 72.1 | 72.1 | 71.2 | 71.9 | 66.7 |
| | Ketone bond amount [mol%] | 0.026 | 0.026 | 0.026 | 0.025 | 0.100 | 0.030 |
| Virgin chip | Addition amount [wt%] | 0 | 20 | 96 | 0 | 0 | 0 |
| As-spun yarn (Non-heat-treated yarn) | Total fineness [dtex] | 280 | 280 | 280 | 280 | 280 | 280 |
| | Number of filaments | 50 | 50 | 50 | 50 | 50 | 50 |
| | Tensile strength [cN/dtex] | 8.3 | 8.5 | 8.8 | 8.1 | 8.1 | 9.5 |
| | Number of single fiber breaks [times/1h] | 0 | 0 | 0 | 0 | 0 | 0 |
| | Total CEG amount [mEq/kg] | 7.48 | 7.20 | 6.60 | 6.80 | 7.37 | 4.6 |
| | Total amount of one-end groups [mEq/kg] | 72.33 | 72 | 71.1 | 71.4 | 72.5 | 67.2 |
| | Ketone bond amount [mol%] | 0.029 | 0.027 | 0.025 | 0.029 | 0.105 | 0.031 |
| Heat-treated yarn | Total fineness [dtex] | 280 | 280 | 280 | 280 | 280 | 280 |
| | Number of filaments | 50 | 50 | 50 | 50 | 50 | 50 |
| | Tensile strength [cN/dtex] | 23 | 24 | 25 | 23 | 18 | 22 |

**[Table 5-continued]**

| | | Reference Example | Comparative Example 1 | Comparative Example 2 | Comparative Example 3 | Comparative Example 4 |
|---|---|---|---|---|---|---|
| Chip-shaped article | Bulk density [g/mL] | 0.67 | 0.13 | 1.30 | 0.10 | 0.30 |
| | Average maximum length [mm] | 0.63 | 20 | 7 | 1 | 42.3 |
| | Average minimum length [mm] | 2.0 | 0.16 | 2 | 0.16 | 1.5 |
| | Molding method | - | Shortcutting | Binder (20%) | Crushing | Thermoforming |
| | Degassing press (10 times) | - | - | - | - | Performed |
| | Total CEG amount [mEq/kg] | 7.02 | 6.5 | 6.8 | 6.5 | 7.25 |
| | Total amount of one-end groups [mEq/kg] | 71.4 | 70.8 | 71 | 70.8 | 72.1 |
| | Ketone bond amount [mol%] | 0.021 | 0.025 | 0.025 | 0.025 | 0.026 |
| Virgin chip | Addition amount [wt%] | 100 | 0 | 0 | 0 | 0 |
| As-spun yarn (Nonheat-treated yarn) | Total fineness [dtex] | 280 | - | - | - | - |
| | Number of filaments | 50 | - | - | - | - |
| | Tensile strength [cN/dtex] | 8.9 | - | - | - | - |
| | Number of single fiber breaks [times/1h] | 0 | Not obtained | Not obtained | Not obtained | Not obtained |
| | Total CEG amount [mEq/kg] | 6.50 | - | - | - | - |
| | Total amount of one-end groups [mEq/kg] | 70.8 | - | - | - | - |
| | Ketone bond amount [mol%] | 0.025 | - | - | - | - |
| Heat-treated yarn | Total fineness [dtex] | 280 | - | - | - | - |
| | Number of filaments | 50 | - | - | - | - |
| | Tensile strength [cN/dtex] | 25 | - | - | - | - |

As shown in Table 5, an as-spun yarn cannot be obtained from any of the chip-shaped articles in Comparative Examples 1 to 4. On the other hand, the chip-shaped articles in Examples 1 to 6 can be melt-molded even when the recovered liquid crystal polyester is used. In particular, the recycled liquid crystal polyester filaments obtained from the chip-shaped articles of Examples 1 to 4 and 6 has as high fiber properties as the liquid crystal polyester filament obtained from the 100 mass% virgin liquid crystal polyester in Reference Example.

### INDUSTRIAL APPLICABILITY

The recycled liquid crystal polyester formed body according to the present invention can be used for various applications such as general industrial materials, civil engineering and construction materials, various reinforcing materials, and electrical and electronic component materials. Especially, where the formed body is the fiber structure, the recycled liquid crystal polyester formed body according to the present invention can be used, for example, as various fiber products including tension members (e.g., electric cables, optical fibers, etc.), heater wire core yarns, cords for various electrical products such as earphone cords, ropes, sling belts, climbing ropes, life lines, fishing lines, fishing nets, longlines, land nets (safety nets, nets for golf practice ranges, etc.), catheters, reinforcing materials for plastics, concrete, and rubber, base cloth for printed circuit boards, sailcloth, protective clothing, and protective gloves.

Although the preferred embodiments of the present invention have been described, various additions, modifications, or deletions may be made without departing from the scope of the present invention. Accordingly, such variants are included within the scope of the present invention.

## Claims

1. A liquid crystal polyester chip-shaped article comprising a recovered liquid crystal polyester formed body as a raw material,
wherein the liquid crystal polyester chip-shaped article has a bulk density of 0.15 to 1.20 g/mL and has an average maximum length of 3 to 30 mm.

2. The liquid crystal polyester chip-shaped article according to claim 1, wherein a liquid crystal polyester constituting the liquid crystal polyester chip-shaped article has a ketone bond amount of 0.050 mol% or less.

3. The liquid crystal polyester chip-shaped article according to claim 1 or 2, wherein a liquid crystal polyester constituting the liquid crystal polyester chip-shaped article has a total amount of carboxy end groups of 20 mEq/kg or less.

4. The liquid crystal polyester chip-shaped article according to claim 1 or 2, wherein a liquid crystal polyester constituting the liquid crystal polyester chip-shaped article has a total amount of one-end groups of 2 to 100 mEq/kg.

5. A method for producing a liquid crystal polyester chip-shaped article, the method at least comprising:
a preparing step of preparing a recovered liquid crystal polyester formed body as a raw material formed body;
an integrating step of performing an integration process on the raw material formed body or a preliminary formed body obtained by cutting or crushing the raw material formed body as necessary, to form an integrated body; and
a cutting step of cutting the integrated body to produce a chip-shaped article having a bulk density of 0.15 to 1.20 g/mL and having an average maximum length of 3 to 30 mm.

6. The method according to claim 5, wherein the integrating step is performed by thermoforming.

7. The method according to claim 5 or 6, wherein a degassing process is performed in the integration step.

8. A recycled liquid crystal polyester formed body at least comprising the liquid crystal polyester chip-shaped article according to claim 1 or 2 as a raw material.

9. The recycled liquid crystal polyester formed body according to claim 8, being a recycled liquid crystal polyester fiber structure.

10. The recycled liquid crystal polyester formed body according to claim 9, wherein the recycled liquid crystal polyester fiber structure comprises a recycled liquid crystal polyester fiber having a single fiber fineness of 50 dtex or less.

11. A method for producing a recycled liquid crystal polyester formed body, the method comprising:
a step of preparing at least the liquid crystal polyester chip-shaped article according to claim 1 or 2 as a raw material; and
a step of melt-extruding the liquid crystal polyester chip-shaped article.
